# EUROPEAN PATENT SPECIFICATION

(11) **EP 1 725 432 B1**
(45) Date of publication and mention of the grant of the patent: **14.05.2008**
(21) Application number: 04749177.4
(22) Date of filing: 15.07.2004
(51) Int. Cl.: B60N 3/16

(54) **HEATING DEVICE AND A METHOD OF FORMING A HEATING DEVICE**
HEIZVORRICHTUNG UND VERFAHREN ZUR HERSTELLUNG EINER HEIZVORRICHTUNG
DISPOSITIF DE RECHAUFFAGE ET SON PROCEDE DE REALISATION

(30) Priority: 01.03.2004 SE 0400515
(43) Date of publication of application: 29.11.2006
(73) Proprietor: SYRJÄLÄINEN, Pentti, 770 12 Sunnansjö (SE)
(72) Inventor: SYRJÄLÄINEN, Pentti, 770 12 Sunnansjö (SE)
(74) Representative: Stenborg, Anders Vilhelm
(86) International application number: PCT/SE2004/001141
(87) International publication number: WO 2005/082667

(56) References cited:
- EP-A1- 0 052 239
- DE-B1- 1 090 123
- FR-A- 1 139 886
- US-A- 3 013 548
- US-A- 3 809 059

## Description

### TECHNICAL FIELD

The invention relates generally to a method and a device for heating liquids, such as beverages, or other substances, such as foodstuffs, and more specifically relates to a method and a device of this kind that utilizes heat from an internal combustion engine.

### BACKGROUND

For vehicles in general it is known to heat drinking water as well as water for e.g. hand-washing by means of heated cooling liquid from the cooling system of the internal combustion engine of a vehicle. Such solutions are known from e.g. US 4, 140, 150 and US 3, 276, 634. Furthermore, US 4, 274, 390; US 3, 148, 675 and US 2, 975, 797 disclose similar structures for heating water for different purposes, such as for washing and for showering. The main difference is that according to the latter documents the water is heated indirectly by the exhaust gases from the internal combustion engine instead of by the cooling liquid. In all said known arrangements the water that is to be heated is taken from one or several tanks in the vehicle and is conducted to a draw-off point in the vehicle after heating.

A common disadvantage of all said known arrangements is that it is only possible to heat the liquid that at each occasion has been added to the tank/tanks. A further shortcoming is that only liquids may be heated and no other products or substances, such as foodstuffs. Finally, the known arrangements cause health hazards, especially when they are employed for heating drinking water etc., since there is a great risk of bacteria growth and corresponding problems in the partially closed tanks and pipe systems thereof.

In many situations drivers and passengers feel a need to be able to heat different beverages during trips and excursions by motor vehicle, and above all by tours in the nature, such as by snowmobile. US 3,013,548 A (corresponding to the preamble of independent product claim 1 and independent method claim 6 respectively) describes a solution where the heat from a combustion engine cooling system is used as heating source for heating optional fluids and/or other substances. For this purpose is used a double-walled container having a jacket surrounding a heat chamber that in turn communicates with an opening at one end of the container and further having a flow channel formed in the jacket, through which flows cooling medium from said cooling system.

### SUMMARY OF THE INVENTION

A general object of the invention is to provide a practically useful solution to the problem of efficiently and securely heating optional liquids/beverages as well as other substances, such as foodstuffs, during trips by motor vehicle.

A basic object of the invention is therefore to provide an improved heating device that utilizes the above described principle of using the heat from the cooling system of an internal combustion engine as a source of the heating of optional liquids or other substances. According to the invention (which is defined in product terms in claim 1) the above stated object is briefly achieved by means of an additional vessel that is provided at the container, that communicates with the flow channel of the jacket and that has a topping-up or replenishment opening for cooling medium, whereby the apparatus acts as and as a replacement for, respectively, an existing expansion vessel of the cooling system.

Further features of the invention are disclosed in the dependent product claim 5.

According to one embodiment of the invention, the additional vessel is integral with the container and communicates with the flow channel through at least one inner channel.

According to another embodiment of the invention, the additional vessel is a separate part that is attached adjacent to the container and that communicates with the outer flow channel through at least one separate line.

In accordance with a practical embodiment of the invention, a discharge line is provided that communicates with the inner heating chamber and that has a shut-off valve that may be opened. With such a configuration it is on the one hand possible to easily discharge heated liquid for use as a beverage. On the other hand, it is also easy to drain off liquid that has been used to clean the heating chamber, e.g. after heating food therein.

Another object of the invention (which is defined in method terms in claim 6) is to provide an improved method of forming a practical heating device utilizing heat from the cooling system of an internal combustion engine of a motor vehicle, said heating device having a container with an outer jacket, an infeed opening for liquids or other substances and an inner heating chamber, whereby the jacket that surrounds the container of the heating device is connected, through an inlet, to cooling medium of the cooling system that has been heated by the internal combustion engine, and by connecting said jacket, through an outlet, to a return flow of the cooling medium of the cooling system.

According to the invention this is achieved by equipping the container of the heating device with a replenishable additional vessel that is provided as or as a replacement for the expansion vessel of the cooling system.

The above given and other objects of the invention are achieved by means of the invention as it is defined, as mentioned above in the accompanying patent claims. Further objects of the invention as well as other advantages offered thereby will also be apparent when reading the following detailed description of embodiments of the invention.

### DESCRIPTION OF THE DRAWINGS

The invention is made clearer in the following description and in the accompanying drawings, in which:
- Fig. 1A: is a side view of a heating device of the background art;
- Fig. 1B: is a plan view from above of the heating device according to Fig. 1A;
- Fig. 2: is a longitudinal section through the heating device according to Fig. 1A;
- Fig. 3A: is a longitudinal section through the heating device according to Fig. 1A and illustrates the use of an additional cooking utensil in the heating chamber;
- Fig. 3B: is a longitudinal section through the heating device according to Fig. 1A and illustrates an application where liquid is heated directly in the heating chamber;
- Fig. 3C: is a longitudinal section through the heating device according to Fig. 1A and illustrates an application where food is heated in the heating chamber;
- Fig. 4: is a partially sectioned side view of an embodiment of a heating device according to the invention;
- Fig. 5: is a side view of an alternative embodiment of a heating device of the background art; and
- Fig. 6: schematically illustrates an application of the heating device according to the invention on a vehicle.

### DETAILED DESCRIPTION OF EMBODIMENTS

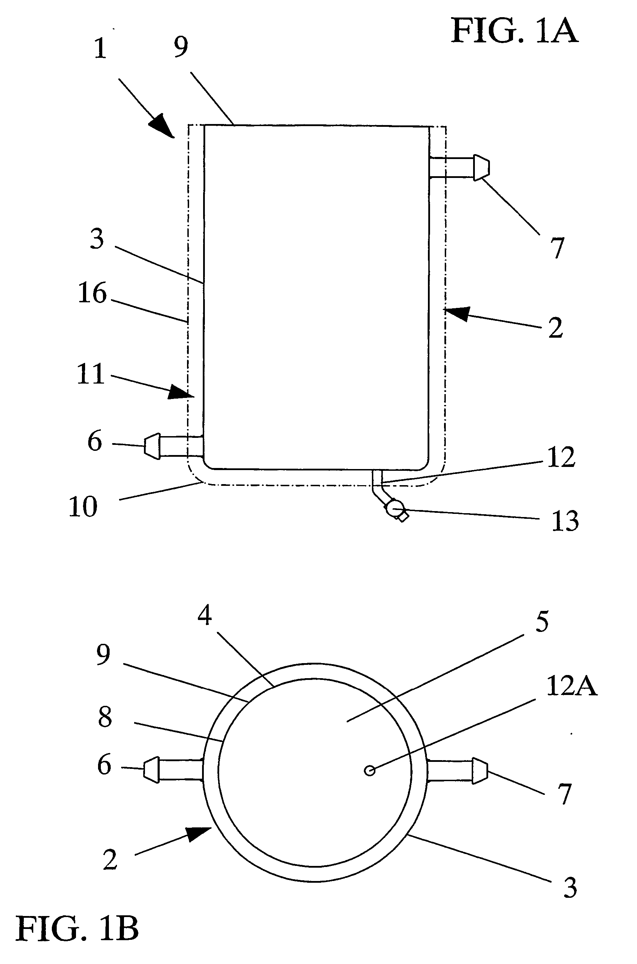

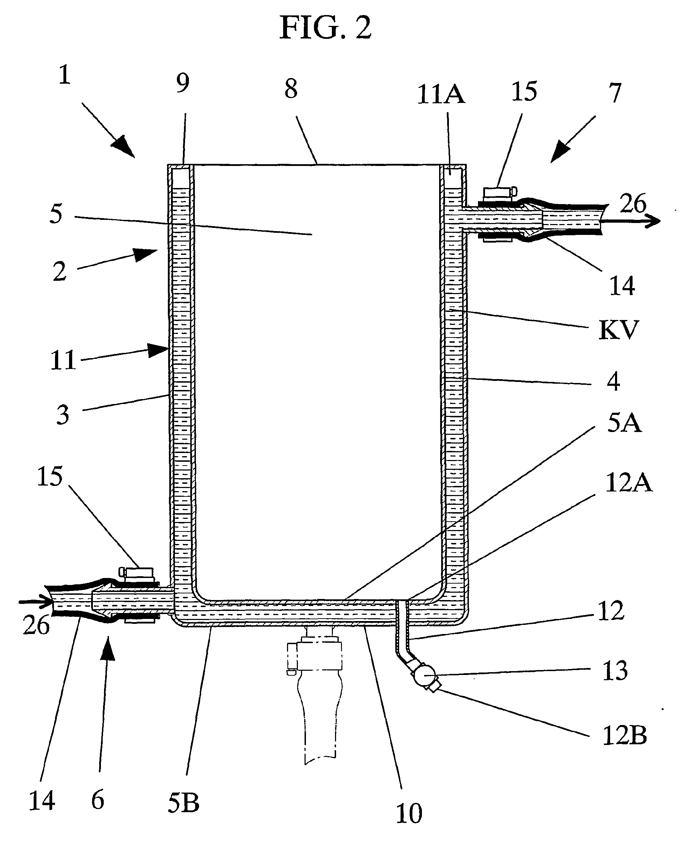

An exemplifying embodiment of a heating device 1 of the background art is illustrated in Figs. 1A-B and 2. The heating device 1 basically consists of a container 2 that in the illustrated embodiment has a generally circular cylindrical shape. The container 2 contains an inner heating chamber 5 that has a bottom 5A and that communicates with an in-feed opening 8 for liquids V or other substances M that are to be heated. Said in-feed opening 8 is formed at an upper end 9 of the container, where "upper" refers to the installed condition of the device. The bottom 5A of the container 2 is closed, except for a discharge line 12, described more closely below, that is provided in this embodiment and that at an inner end 12A thereof opens into the heating chamber 5.

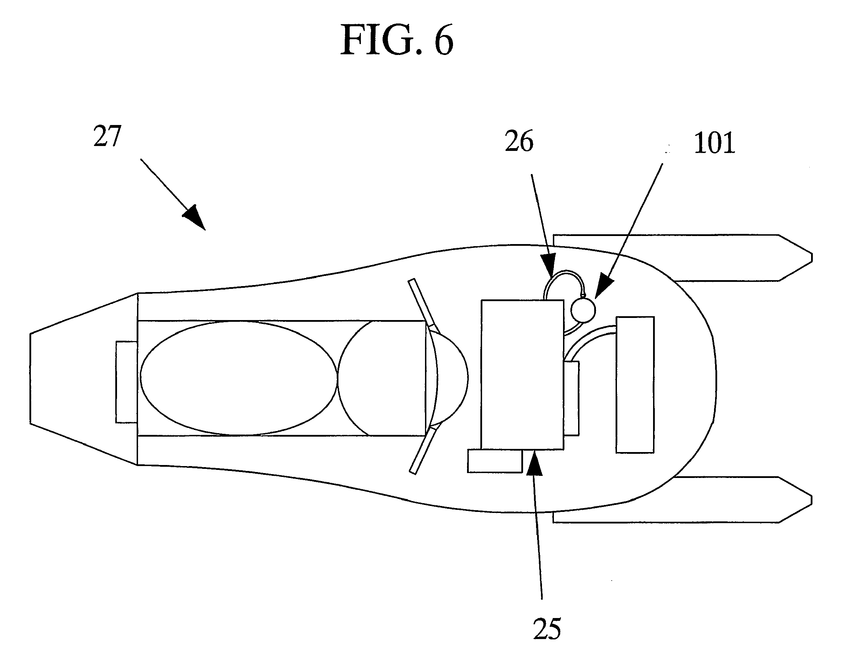

An outer jacket 11 that in the illustrated embodiment is formed integral with the actual container 2 surrounds the heating chamber 5 at the sides thereof and at its bottom. More specifically, the container is double-walled, meaning that it is made having outer and inner side walls 3 and 4, respectively, as well as outer and inner bottom walls 5B and 5A, respectively, each being provided at a distance from each other. At the upper end 9 the side walls are connected fluid-tight to each other and at a lower end 10 of the container 2 the side walls are connected fluid-tight to the respective bottom wall 5A, 5B. Thus, the jacket 11 is formed by these double walls 3, 4, 5A and 5B and contains a flow channel 11A that is intended to be connected to the cooling system 26 of an internal combustion engine 25 (see Fig. 6) through an inlet 6 and an outlet 7, respectively. When the jacket 11 and its inner flow channel 11A are connected to the cooling system 26 the heated cooling fluid KV flows therethrough.

The inlet 6 is suitably a hose nipple that is here attached to the outer side wall 3 close to the lower end 10 of the container, but may alternatively be attached to the outer bottom wall 5B, as is indicated in Fig. 2. The outlet 7 is likewise suitably a hose nipple that is attached to the outer side wall 3 close to the upper end 9 of the container. In this design of the device 1 a positioning of the inlet 6 at a lower level than the outlet 7 will in most cases result in a higher level of the cooling liquid KV in the flow channel 11A, but all the same the invention comprises also a reversed positioning of the inlet and the outlet

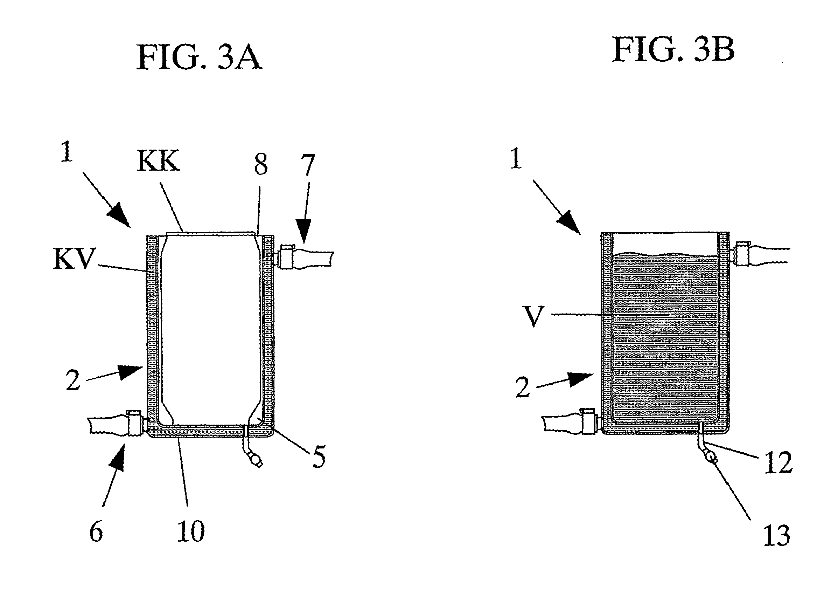

In a preferred embodiment, the container 2 and its walls 3, 4, 5A and 5B, respectively, consist of a suitable metal that has a good heat conductibility, e.g. aluminum, for efficiently conducting heat from the heated cooling medium KV in the flow channel 11A and to the liquid V or other substance M (see Fig. 3A-C) that is to be heated in the inner heating chamber 5. The container 2 and the outer jacket 11, respectively, may also be provided with an outer insulation 16 (indicated with dash-dot lines in Fig. 1A) for the purpose of maximizing the heat conduction inwardly towards the heating chamber 5 and also for reducing the risk of a user getting burned on the device 1. In the metallic design the side walls 3, 4 are welded together at the upper end 9, such as by an inwardly directed flange at the outer wall 3, as is indicated in Fig. 2, or through an annular plate, not illustrated, and the inlet 6 and the outlet 7 as well as the below described discharge line 12 are likewise attached to the container 2 through welding. Notwithstanding this, it is possible within the scope of the invention to manufacture the device from any other appropriate material, such as a suitable plastic material. In all designs and applications other appropriate methods, such as bonding, may naturally also be employed, where appropriate, to connect the different parts of the container with each other and to attach the hose nipples, respectively.

In order to permit the discharge of liquid V from the heating chamber 5 said discharge line 12 is provided at the lower end 10 of the container 2. As was mentioned above, an upper end 12A of the discharge line 12 opens in the bottom 5A of the heating chamber 5. From there, the discharge line 12 extends through the flow channel 11A and through the outer bottom wall 5B, so that a lower free end 12 B thereof is positioned below the container 2. Discharge of liquid through the discharge line 12 is controlled by means of a valve 13, such as a shut-off valve that may be opened, that is provided adjacent its free end 12B. The discharge line 12 also has the advantageous effect of stabilizing the container 2, and specifically the mutual position of the inner 4, 5A and outer 3, 5B walls.

When attaching the device 1 of this design it must naturally be a primary concern to make sure that the container 2 is aligned to be essentially vertical, having its in-feed opening 8 facing upwardly, In other respects the positioning shall be adapted to the space conditions by the engine of a vehicle 27 in question, see especially the illustration in the below described Fig. 6, and to the hose or pipe routing of the cooling system 26 in question. As is illustrated in Fig. 2, the device 1 is connected to the cooling system 26 of an internal combustion engine 25 (see Fig. 6) by means of hoses 14. These hoses may be the regular hoses of the cooling system or specific hoses that are adapted to a specific application and that are suitably connected fluid-tight to the hose nipples of the inlet 6 and the outlet 7, respectively, by means of conventional hose clamps 15. In particular, heated cooling medium KV from the cooling system 26 of an internal combustion engine 25 is connected to the inlet 6 of the flow channel 11A in the outer jacket 11 of the container 2 and the outlet 7 from the outer jacket 11 of the container 2 is connected to a return flow of the cooling medium of the cooling system.

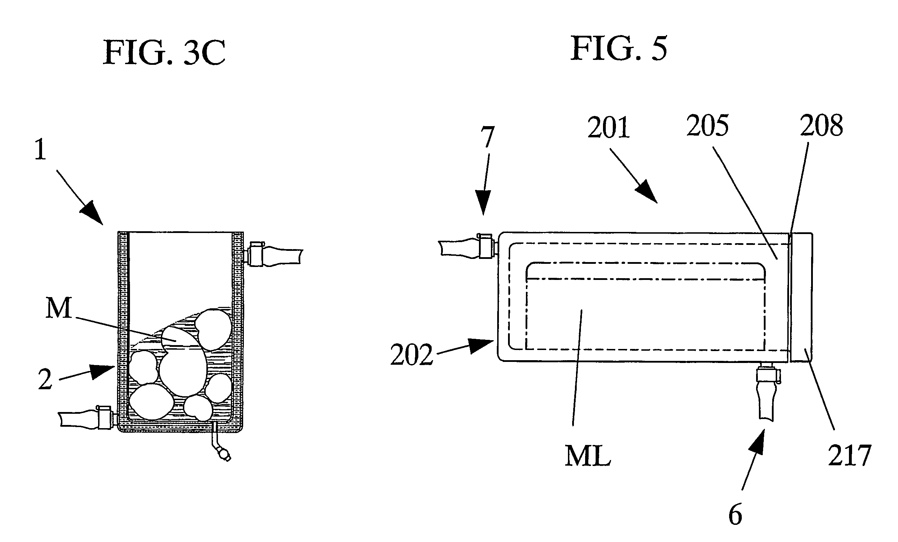

Figs. 3A-C show different examples that illustrate the many possible applications of a device 1. Fig. 3A illustrates the use of a separate cooking utensil KK in the inner heating chamber 5, whereby the cooking utensil KK suitably has outer dimensions that are slightly smaller than those of the inner heating chamber 5 and the upper opening 8, which in this case have substantially the same diameter. However, cooking-utensils having significantly smaller diameter may also be used, especially if the heating chamber 5 is filled with a corresponding amount of liquid that surrounds the cooking utensil KK and transfers heat thereto. In an exemplifying embodiment the in-feed opening 8 in the first upper end 9 of the container 2 as well as the inner heating chamber 5 has an inner diameter of at least approximately 68 mm and the inner heating chamber 5 has a height of approximately 150 mm. Thereby, a standard 50cl or even 33cl recyclable aluminum may be used as cooking utensil KK. Fig. 3B illustrates the heating of liquid V that has been filled directly into the inner heating chamber 5 and that after heating may be discharged through the discharge line 12, and Fig. 3C finally illustrates the heating of food M directly in the inner heating chamber 5.

In the light of the above description, it is obvious that this heating device 1 results in significant advantages. Above all, the device provides very great flexibility when it comes to heating of different liquids or foodstuffs. Furthermore, it is also possible to use a cooking-utensil KK, which is adapted to the heating chamber 5, to heat the liquid V and the food M, respectively, so that no specific cleaning of the heating chamber is required. Notwithstanding this, the device 1 offers a possibility to easily clean the heating chamber 5 in the relevant case. This is done by means of water and possibly detergent that is filled through the opening 8 and that after cleaning is discharged through the discharge line 12. When necessary, the cleaning liquid may also be heated in the heating chamber 5, so that a particularly effective cleaning is achieved. Practical trials have also shown that it is possible without further ado to bring a liquid to the boil in the heating chamber. As was mentioned above, by using a design having an inner heating chamber 5 that in the mounted position is open upwardly, it is possible to heat directly in the heating chamber 5 not only optional liquids but also food that has been brought along.

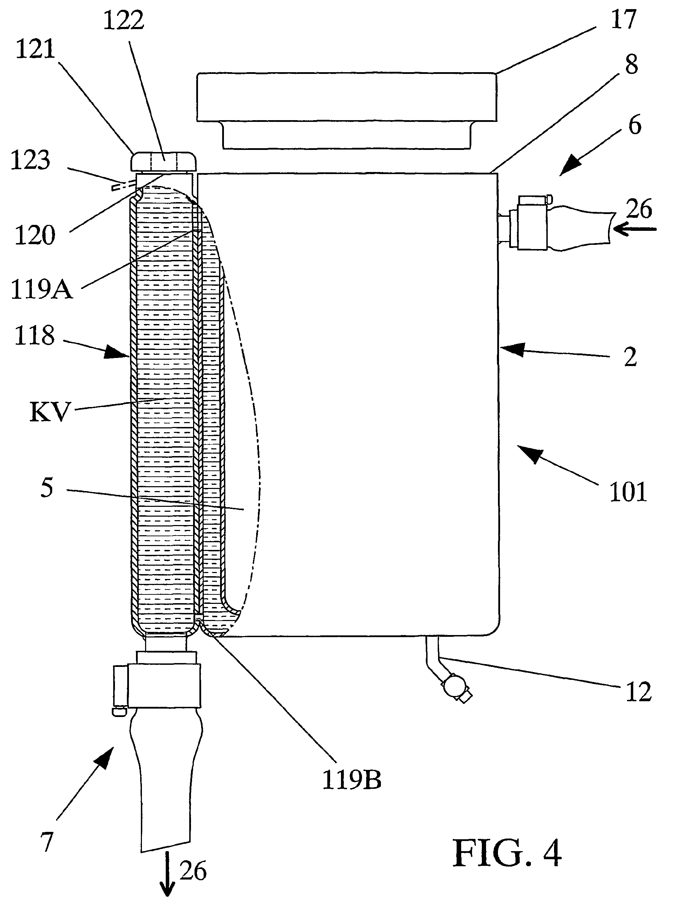

Fig. 4 now illustrates an embodiment of a device 101 according to the invention that is intended for use as a replacement for an existing expansion vessel of a cooling system 26. In this case, the container 2 is equipped with a replenishable additional vessel 118 that is communicated with the outer jacket 11 of the container, and the container 2 is provided in the position of the expansion vessel of the cooling system 26. In this embodiment, the container 2 therefore corresponds to the one of Fig. 1A-B and 2, except that an additional vessel 118 is provided. The vessel 118 communicates with the flow channel 11A through upper and lower inner channels 119A and 119B, respectively, of which the upper one has a significantly larger flow passage opening, substantially corresponding to that of the inlet 6, than the lower one. Furthermore, the vessel 118 has an upper replenishment opening 120 for cooling liquid, which may be closed by means of a lid 121. In this case, the inlet 6 is also preferably provided at a higher level at the outer wall 3 of the container 2, whereas the outlet 7 is provided at a lower level, at the bottom of the additional vessel 118. In the illustrated embodiment the additional vessel 118 is formed integral with the container 2, but the invention likewise comprises a variant, not specifically illustrated here, where the additional vessel is formed as a separate part that is provided adjacent to the container and that communicates with the outer flow channel through one or more outer lines.

The additional vessel 118 or a portion thereof, not specifically illustrated, is preferably semitransparent in order to indicate the liquid level of the system. Furthermore, the lid 121 is preferably provided with a safety valve 122, only indicated, as is well known within this area and therefore does not require any further explanation. An alternative to the safety valve is the provision of a so called overflow pipe 123 just below the upper opening 120 of the vessel.

In the example of Fig. 4 it is shown that even if the heating chamber 5 is normally open outwardly towards the surroundings the infeed opening 8 that is provided at the upper end 9 of the container 2 may be tightly closed or sealed by means of a removable cover 17 that in the illustrated embodiment is designed to be pushed into the opening 8 for forming an interference fit therewith. Alternatively, the cover 17 and the upper end 9 of the container 2 may be provided with complementary internal and external, respectively, threads, not illustrated, for allowing a screw fitting to be formed between the cover and the container.

Fig. 5 illustrates a further alternative design of a heating device 201 of the background art, in which the container 202 is extended substantially horizontally, with its in-feed opening 208 being directed towards one side. Like in Figs. 1A-B and 2 the inlet 6 is provided at a lower level than the outlet 7. Separate cooking-utensils of different kinds, such as the indicated lunch box ML, may be placed in the beating chamber 205. The heating chamber 205 is also closeable by means of a cover 217 that essentially corresponds to that according to the embodiment of Fig. 4, but that in this case may suitably be replaced by an above mentioned design where the cover is screw-fitted to the container.

A presently preferred application of the device 101 according to the invention is schematically illustrated in Fig. 6. In this case, it is a matter of installing the heating device 101 in the engine compartment of a snowmobile 27, connected to the cooling system 26 of the internal combustion engine 25 of the snowmobile.

The invention has been described herein with specific reference to preferred embodiments thereof However, it shall be emphasized that in its widest scope it covers also valiant of the illustrated basic designs, as well as modifications thereof. An example thereof is a variant that is not intended for attachment directly in connection with an engine compartment but in a practical position adjacent a driving compartment or a passenger cabin. In such an application special hoses are in most cases required for connecting the device to the cooling system of an engine and greater importance may be attached to the practical and/or esthetical design of the actual container and to the positioning of the inlet and outlet, respectively, of the jacket and of the discharge line. In another modified embodiment, the jacket that surrounds or encloses the inner heating chamber may be separate from the actual container.

Other examples of modifications that have not been specifically illustrated, but that are covered by the invention, are embodiments where the heating device, e.g. for practical reasons or for appearance, is not configured having a circular cylindrical shaped container but where the container is e.g. generally square, rectangular or oval. The shape of the container may naturally be governed by the space conditions of the motor vehicle and at its engine, respectively, or by the intended positioning in an engine compartment or, as was mentioned above, in connection with a passenger cabin.

It will be understood by those skilled in the art that various modifications and changes may be made to the present invention without departure from the scope thereof, which is defined by the appended claims.

## Claims

1. Apparatus (101) for heating liquids (V) or other substances (M) by means of heat from a cooling system (26) of an internal combustion engine (25), and having a container (2) with an outer jacket (11) through which flows cooling medium (KV) from said cooling system (26) and that partially encloses an inner heating chamber (5); whereby the inner heating chamber communicates with an in-feed opening (8) for said liquids or other substances, which is provided at a first end (9) of the container (2) and whereby the container (2) is double-walled and the jacket (11) contains a flow channel (11A) that is formed between corresponding walls (3, 4, 5A, 5B) of the container and that communicates with the cooling medium (CV) of said cooling system (26) through an inlet (6) and an outlet (7), **characterized in that** at the container (2) is provided an additional vessel (118) that communicates with the flow channel (11A) and that has an upper replenishment opening (120) for cooling liquid, whereby the apparatus is intended for use as and as replacement for, respectively, an existing expansion vessel of the cooling system (26).

2. Apparatus (101) according to claim 1, **characterized in that** the additional vessel (118) is integral with the container (2) and communicates with the flow channel (11A) through at least one inner channel (119A, 119B).

3. Apparatus (101) according to claim 1, **characterized in that** the additional vessel (118) is formed as a separate part that is attached adjacent to the container (2) and that communicates with the outer flow channel (11A) through at least one separate line.

4. Apparatus (101) according to any of claims 1-3, **characterized in that** the container (2) is closed at a second end (10) thereof, which is opposite to the first end (9), except for a discharge line (12) that is extended through said second end and that at an inner end (12A) thereof communicates with the inner heating chamber (5).

5. Apparatus (101) according to any of claims 1-4, **characterized in that** the container (2) has a generally cylindrical shape, **in that** the opening (8) at the first end (9) of the container as well as the inner heating chamber (5) have a diameter of at least 68 mm and **in that** the inner heating chamber (5) has a height of approximately 150 mm,

6. A method of forming a heating device (101) for heating liquids (V) or other substances (M) by means of heat from a cooling system (26) of an internal combustion engine (25) of a motor vehicle (27), wherein a container (2) that has an outer jacket (11), an in-feed opening (8) for said liquids or other substances at a first end (9) thereof and an inner heating chamber (5) communicating with the in-feed opening is attached to the motor vehicle and wherein an inlet (6) of a flow channel (11A) in the outer jacket (11) of the container (2) is connected to cooling medium (KV) in the cooling system (26) that has been heated by the internal combustion engine (25) and an outlet (7) from the outer jacket (11) of the container (2) is connected to a return flow of the cooling medium of the cooling system, **characterized by** equipping the container (2) with a replenishable additional vessel (118) that is brought into communication with the flow channel (11A) in the outer jacket (11) of the container (2) and that is provided at the position of and/or as a replacement for an expansion vessel of the cooling system (26).

## Patentansprüche

1. Vorrichtung (101) zum Erwärmen von Flüssigkeiten (V) oder anderen Substanzen (M) mittels Wärme aus einem Kühlsystem (26) einer Verbrennungskraftmaschine (25), wobei die Vorrichtung einen Behälter (2) mit einem äußeren Mantel (11) aufweist, durch welchen ein Kühlmedium (KV) aus dem Kühlsystem (26) fließt und welcher eine innere Erwärmungskammer (5) teilweise umgibt; wobei die innere Erwärmungskammer mit einer Einfüllöffnung (8) für die Flüssigkeiten oder anderen Substanzen kommuniziert, welche an einem ersten Ende (9) des Behälters (2) bereitgestellt ist, und wobei der Behälter (2) doppelwändig ausgestaltet ist und der Mantel (11) einen Strömungskanal (11A) enthält, welcher zwischen korrespondierenden Wänden (3, 4, 5A, 5B) des Behälters ausgebildet ist und welcher über einen Einlass (6) und einen Auslass (7) mit dem Kühlmedium (CV) des Kühlsystems (26) kommuniziert, **dadurch gekennzeichnet, dass** am Behälter ein zusätzliches Gefäß (118) bereitgestellt ist, welches mit dem Strömungskanal (11A) kommuniziert und welches eine obere Nachfüllöffnung (120) für Kühlflüssigkeit aufweist, wobei die Vorrichtung für die Verwendung als bzw. als Ersatz für ein vorhandenes Ausgleichsgefäß des Kühlsystems (26) vorgesehen ist.

2. Vorrichtung (101) nach Anspruch 1, **dadurch gekennzeichnet, dass** das zusätzliche Gefäß (118) in den Behälter (2) integriert ist und über mindestens einen inneren Kanal (119A, 119B) mit dem Strömungskanal (11A) kommuniziert.

3. Vorrichtung (101) nach Anspruch 1, **dadurch gekennzeichnet, dass** das zusätzliche Gefäß (118) als separates Teil ausgebildet ist, welches in Nachbarschaft zu dem Behälter (2) angebracht ist und welches über mindestens eine separate Leitung mit dem äußeren Strömungskanal (11A) kommuniziert.

4. Vorrichtung (101) nach einem der Ansprüche 1 bis 3, **dadurch gekennzeichnet, dass** der Behälter (2) an seinem zweiten Ende (10) geschlossen ist, welches dem ersten Ende (9) gegenüber liegt, bis auf eine Abflussleitung (12), welche sich durch das zweite Ende hindurch erstreckt und welche an einem inneren Ende (12A) davon mit der inneren Erwärmungskammer (5) kommuniziert.

5. Vorrichtung (101) nach einem der Ansprüche 1 bis 4, **dadurch gekennzeichnet, dass** der Behälter (2) eine im Allgemeinen zylindrische Form aufweist, dass die Öffnung (8) am ersten Ende (9) des Behälters ebenso wie die innere Erwärmungskammer (5) einen Durchmesser von mindestens 68 mm aufweist und dass die innere Erwärmungskammer (5) eine Höhe von ungefähr 150 mm aufweist.

6. Verfahren zum Bilden einer Erwärmungsvorrichtung (101) zum Erwärmen von Flüssigkeiten (V) oder anderen Substanzen (M) mittels Wärme aus einem Kühlsystem (26) einer Verbrennungskraftmaschine (25) eines Kraftfahrzeugs (27), wobei ein Behälter (2) an dem Kraftfahrzeug angebracht ist, welcher einen äußeren Mantel (11), eine Einfüllöffnung (8) für die Flüssigkeiten oder anderen Substanzen an einem ersten Ende (9) davon und eine innere Erwärmungskammer (5) aufweist, welche mit der Einlassöffnung kommuniziert, und wobei ein Einlass (6) eines Strömungskanals (11A) in dem äußeren Mantel (11) des Behälters (2) mit Kühlmedium (KV) in dem Kühlsystem (26) verbunden ist, welches durch die Verbrennungskraftmaschine (25) erwärmt worden ist, und ein Auslass (7) von dem äußeren Mantel (11) des Behälters (2) mit einem Rückfluss des Kühlmediums des Kühlsystems verbunden ist, **dadurch gekennzeichnet, dass** der Behälter (2) mit einem nachfüllbaren zusätzlichen Gefäß (118) ausgerüstet wird, welches mit dem Strömungskanal (11A) in dem äußeren Mantel (11) des Behälters (2) in Kommunikation gebracht wird und welches an der Position eines Ausgleichsgefäßes des Kühlsystems (26) und/oder als Ersatz für ein solches bereitgestellt wird.

## Revendications

1. Appareil (101) pour chauffer des liquides (V) ou d'autres substances (M) au moyen de chaleur provenant d'un système de refroidissement (26) d'un moteur à combustion interne (25), et ayant un récipient (2) équipé d'une chemise externe (11) à travers laquelle circule le milieu de refroidissement (KV) provenant dudit système de refroidissement (26) et qui entoure partiellement une chambre de chauffage interne (5) ; moyennant quoi la chambre de chauffage interne communique avec une ouverture d'alimentation (8) pour lesdits liquides ou autres substances, qui est située au niveau d'une première extrémité (9) du récipient (2) et moyennant quoi le récipient (2) a une double paroi et la chemise (11) contient un canal d'écoulement (11A) qui est formé entre les parois correspondantes (3, 4, 5A, 5B) du récipient et qui communique avec le milieu de refroidissement (CV) dudit système de refroidissement (26) par le biais d'un orifice d'entrée (6) et d'un orifice de sortie (7), **caractérisé en ce qu'**au niveau du récipient (2) est située une cuve supplémentaire (118) qui communique avec le canal d'écoulement (11A) et qui a une ouverture de remplissage supérieure (120) pour liquide de refroidissement, moyennant quoi l'appareil est destiné à être utilisé en tant que et en remplacement de, respectivement, une cuve d'expansion existante du système de refroidissement (26).

2. Appareil (101) selon la revendication 1, **caractérisé en ce que** la cuve supplémentaire (118) est intégrée dans le récipient (2) et communique avec le canal d'écoulement (11A) par le biais d'au moins un canal interne (119A, 119B).

3. Appareil (101) selon la revendication 1, **caractérisé en ce que** la cuve supplémentaire (118) se présente sous la forme d'une partie séparée qui est fixée à côté du récipient (2) et qui communique avec le canal d'écoulement externe (11A) par le biais d'au moins une conduite séparée.

4. Appareil (101) selon l'une quelconque des revendications 1 à 3, **caractérisé en ce que** le récipient (2) est fermé au niveau d'une deuxième extrémité (10) de celui-ci, qui est opposée à la première extrémité (9), hormis qu'une conduite d'évacuation (12) s'étend à travers ladite deuxième extrémité et qu'une extrémité interne (12A) de celle-ci communique avec la chambre de chauffage interne (5).

5. Appareil (101) selon l'une quelconque des revendications 1 à 4, **caractérisé en ce que** le récipient (2) a une forme généralement cylindrique, **en ce que** l'ouverture (8) au niveau de la première extrémité (9) du récipient ainsi que la chambre de chauffage interne (5) ont un diamètre d'au moins 68 mm et **en ce que** la chambre de chauffage interne (5) a une hauteur d'environ 150 mm.

6. Procédé de formation d'un dispositif de chauffage (101) pour chauffer des liquides (V) ou d'autres substances (M) au moyen de chaleur provenant d'un système de refroidissement (26) d'un moteur à combustion interne (25) d'un véhicule motorisé (27), dans lequel un récipient (2) qui a une chemise externe (11), une ouverture d'alimentation (8) pour lesdits liquides ou autres substances au niveau d'une première extrémité (9) de celle-ci et une chambre de chauffage interne (5) communiquant avec l'ouverture d'alimentation est fixée au véhicule motorisé et dans lequel un orifice d'entrée (6) d'un canal d'écoulement (11A) dans la chemise externe (11) du récipient (2) est connecté au milieu de refroidissement (KV) dans le système de refroidissement (26) qui a été chauffé par le moteur à combustion interne (25) et un orifice de sortie (7) à partir de la chemise externe (11) du récipient (2) est connecté à l'écoulement restitué du milieu de refroidissement du système de refroidissement, **caractérisé par** l'équipement du récipient (2) avec une cuve remplissable supplémentaire (118) qui est mise en communication avec le canal d'écoulement (11A) dans la chemise externe (11) du récipient (2) et qui est située au niveau de la position de et/ou en remplacement d'une cuve d'expansion du système de refroidissement (26).
